# EUROPEAN PATENT APPLICATION

(11) **EP 4 597 941 A1**
(43) Date of publication of application: **06.08.2025**
(21) Application number: 22959775.2
(22) Date of filing: 26.09.2022
(51) Int. Cl.: H04L 27/00, H04L 5/00

(54) **REPETITION METHOD AND APPARATUS, COMMUNICATION APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2022/121496
(87) International publication number: WO 2024/065123

(57) **Abstract**

The present disclosure relates to a repetition method and apparatus, a communication apparatus, and a storage medium, wherein the repetition method comprises: determining a first time domain unit used for full-duplex communication; determining a first frequency domain resource for repetition; when the first frequency domain resource for repetition located in the first time domain unit is not completely located in a sub-band of the first time domain unit, processing the first frequency domain resource, so as to determine a second frequency domain resource entirely located in a sub-band of the first time domain unit, and within the first time domain unit, performing repetition via the second frequency domain resource. According to the present disclosure, processing the first frequency domain resource for repetition can ensure repetition on a second frequency domain resource entirely located in a sub-band of the first time domain unit, and repetition on a third frequency domain resource located in an active bandwidth part of a second time domain unit, thereby ensuring that a terminal can smoothly complete repetition.

## Description

### TECHNICAL FIELD

The present disclosure relates to the communication technical field, and in particular, to a repetition method, a repetition apparatus, a communication apparatus, and a computer-readable storage medium.

### BACKGROUND

In order to improve communication efficiency, a full-duplex communication is proposed in related art. For example, an uplink (UL) subband is configured for a terminal in a downlink (DL) slot, so that the terminal can send information to a network side device in the uplink subband of the downlink slot, and can also receive information sent by the network device in a part of the downlink slot other than the uplink subband, thereby realizing the full-duplex communication.

In addition, in order to improve the reliability of transmission, the related art proposes a repetition technology, which can be used to realize repetition transmission of the same information, and each repetition in the repetition transmission can be located in a different slot. Since the frequency domain resource for each repetition is the same, there is a problem that the frequency domain resource is not entirely located in a subband, or not entirely located in an active BandWidth Part (BWP).

### SUMMARY

In view of the above, embodiments of the present disclosure propose a repetition method, a repetition apparatus, a communication apparatus, and a computer-readable storage medium to solve the technical problem in the related art.

According to a first aspect of an embodiment of the present disclosure, a repetition method is proposed. The method is performed by a terminal. The method includes: determining a first time domain unit for a full-duplex communication and/or a second time domain unit not for the full-duplex communication; determining a first frequency domain resource for a repetition; when the first frequency domain resource for the repetition in the first time domain unit is not entirely located in a subband of the first time domain unit, processing the first frequency domain resource to determine a second frequency domain resource that is entirely located in the subband of the first time domain unit, and performing the repetition in the second frequency domain resource in the first time domain unit; and/or when the first frequency domain resource for the repetition in the second time domain unit is not entirely located in an active bandwidth part of the second time domain unit, processing the first frequency domain resource to determine a third frequency domain resource that is entirely located in the active bandwidth part of the second time domain unit, and performing the repetition in the third frequency domain resource in the second time domain unit.

According to a second aspect of an embodiment of the present disclosure, a repetition method is proposed. The method is performed by a network device. The method includes: determining a first time domain unit used by a terminal for a full-duplex communication and/or a second time domain unit not for the full-duplex communication; determining a first frequency domain resource used by the terminal for a repetition; when the first frequency domain resource for the repetition in the first time domain unit is not entirely located in a subband of the first time domain unit, processing the first frequency domain resource to determine a second frequency domain resource that is entirely located in the subband of the first time domain unit, and performing the repetition with the terminal in the second frequency domain resource in the first time domain unit; and/or, when the first frequency domain resource for repetition in the second time domain unit is not entirely located in an active bandwidth part of the second time domain unit, processing the first frequency domain resource to determine a third frequency domain resource that is entirely located in the active bandwidth part of the second time domain unit, and performing the repetition with the terminal in the third frequency domain resource in the second time domain unit.

According to the third aspect of an embodiment of the present disclosure, a repetition system is proposed. The repetition system includes a terminal and a network side device. The terminal is configured to implement the repetition method performed by the terminal, and the network device is configured to implement the repetition method performed by the network device.

According to a fourth aspect of an embodiment of the present disclosure, a repetition apparatus is proposed. The apparatus includes: a processing module configured to determine a first time domain unit for a full-duplex communication and/or a second time domain unit not for the full-duplex communication; determine a first frequency domain resource for a repetition; and when the first frequency domain resource for the repetition in the first time domain unit is not entirely located in a subband of the first time domain unit, process the first frequency domain resource to determine a second frequency domain resource that is entirely located in the subband of the first time domain unit, and/or when the first frequency domain resource for the repetition in the second time domain unit is not entirely located in an active bandwidth part of the second time domain unit, process the first frequency domain resource to determine a third frequency domain resource that is entirely located in the active bandwidth part of the second time domain unit; and a communication module configured to: perform the repetition in the second frequency domain resource in the first time domain unit; and/or perform the repetition in the third frequency domain resource in the second time domain unit.

According to a fifth aspect of an embodiment of the present disclosure, a repetition apparatus is proposed. The apparatus includes: a processing module configured to determine a first time domain unit used by a terminal for a full-duplex communication and/or a second time domain unit not for the full-duplex communication; determine a first frequency domain resource used by the terminal for a repetition; and when the first frequency domain resource for the repetition in the first time domain unit is not entirely located in a subband of the first time domain unit, processing the first frequency domain resource to determine a second frequency domain resource that is entirely located in the subband of the first time domain unit, and/or when the first frequency domain resource for the repetition in the second time domain unit is not entirely located in an active bandwidth part of the second time domain unit, processing the first frequency domain resource to determine a third frequency domain resource that is entirely located in the active bandwidth part of the second time domain unit; and a communication module configured to: perform the repetition with the terminal in the first time domain unit in the second frequency domain resource; and/or perform the repetition with the terminal in the second time domain unit in the third frequency domain resource.

According to a sixth aspect of an embodiment of the present disclosure, a communication apparatus is proposed. The communication apparatus includes: a processor; and a memory configured to store a computer program; wherein when the computer program is executed by the processor, the above-mentioned repetition method performed by the terminal is implemented.

According to a seventh aspect of an embodiment of the present disclosure, a communication apparatus is proposed. The communication apparatus includes: a processor; and a memory configured to store a computer program; wherein when the computer program is executed by the processor, the above-mentioned repetition method performed by the network device is implemented.

According to an eighth aspect of an embodiment of the present disclosure, a computer-readable storage medium storing a computer program is proposed. When the computer program is executed by a processor, the above-mentioned repetition method performed by the terminal is implemented.

According to a ninth aspect of an embodiment of the present disclosure, a computer-readable storage medium storing a computer program is proposed. When the computer program is executed by a processor, the above-mentioned repetition method performed by a network device is implemented.

According to the embodiments of the present disclosure, by processing the first frequency domain resource for the repetition, it can be ensured that the repetition is performed in the second frequency domain resource that is entirely located in the subband in the first time domain unit, the repetition is performed in the third frequency domain resource that is entirely located in the active bandwidth part in the second time domain unit, thereby ensuring that the terminal can successfully complete the repetition(s).

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those of ordinary skill in this art, other drawings can be obtained based on these drawings without creative work.
FIG. 1 is a schematic flowchart showing a repetition method according to an embodiment of the present disclosure.
FIG. 2 is a schematic flowchart showing another repetition method according to an embodiment of the present disclosure.
FIG. 3 is a schematic flowchart showing yet another repetition method according to an embodiment of the present disclosure.
FIG. 4 is a schematic diagram showing a frequency domain resource according to an embodiment of the present disclosure.
FIG. 5 is a schematic flowchart showing yet another repetition method according to an embodiment of the present disclosure.
FIG. 6 is a schematic flowchart showing yet another repetition method according to an embodiment of the present disclosure.
FIG. 7 is a schematic diagram showing another frequency domain resource according to an embodiment of the present disclosure.
FIG. 8 is a schematic diagram showing yet another frequency domain resource according to an embodiment of the present disclosure.
FIG. 9 is a schematic flowchart showing a repetition method according to an embodiment of the present disclosure.
FIG. 10 is a schematic block diagram of a repetition apparatus according to an embodiment of the present disclosure.
FIG. 11 is a schematic block diagram of a repetition apparatus according to an embodiment of the present disclosure.
FIG. 12 is a schematic block diagram showing an apparatus for repetition according to an embodiment of the present disclosure.
FIG. 13 is a schematic block diagram showing an apparatus for repetition according to an embodiment of the present disclosure.

### DETAILED DESCRIPTION

The following will clearly and completely describe the technical solutions in the embodiments of the present disclosure in combination with the drawings in the embodiments of the present disclosure to. Obviously, the described embodiments are only a part of the embodiments of the present disclosure, not all of the embodiments. Based on the embodiments in the present disclosure, all other embodiments obtained by those of ordinary skill in this art without making creative work fall within the scope of protection of the present disclosure.

The terms used in the embodiments of the present disclosure are only for the purpose of describing example embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, the information should not be limited to these terms. These terms are only used to distinguish the same type of information from each other. For example, without departing from the scope of the embodiments of the present disclosure, first information may also be referred to as second information, and similarly, the second information may also be referred to as the first information. Depending on the context, the word "if" as used herein may be interpreted as "when" or "in a case where" or "in response to determining...".

For the purpose of brevity and ease of understanding, the terms used herein to characterize size relationships are "greater than" or "less than", "higher than" or "lower than". However, it is understood by those skilled in the art that the term "greater than" also covers the meaning of "greater than or equal to", and "less than" also covers the meaning of "less than or equal to", the term "higher than" covers the meaning of "higher than or equal to", and "lower than" also covers the meaning of "lower than or equal to".

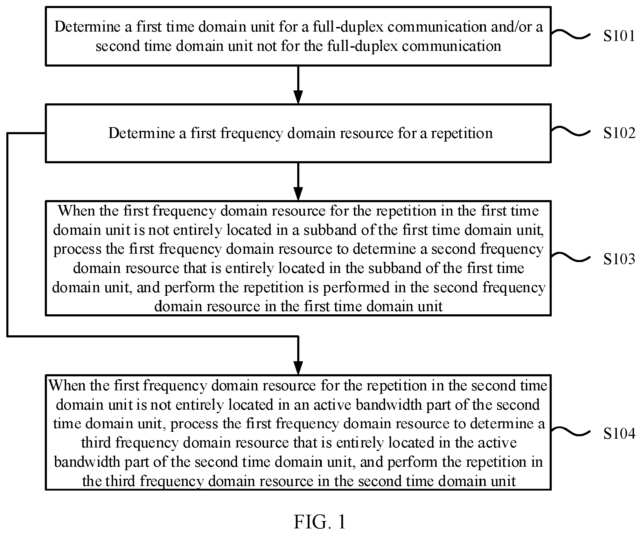

FIG. 1 is a schematic flowchart of a repetition method according to an embodiment of the present disclosure. The repetition method shown in this embodiment may be performed by a terminal, and the terminal includes but is not limited to a communication apparatus such as a mobile phone, a tablet computer, a wearable device, a sensor, an Internet of Things device, etc. The terminal may communicate with a network device, and the network device includes but is not limited to a network device in a communication system such as 4G, 5G, 6G, etc., for example, the network device may be a base station, a core network, etc.

As shown in FIG. 1, the repetition method may include the following steps:
In step S101, a first time domain unit for a full-duplex communication and/or a second time domain unit not for the full-duplex communication is determined. The first time domain unit may also be referred to as a Subband Full-Duplex (SBFD) slot, and the second time moment may be referred to as a normal slot.
In step S102, a first frequency domain resource for a repetition is determined.
In step S103, when the first frequency domain resource for the repetition in the first time domain unit is not entirely located in a subband of the first time domain unit, the first frequency domain resource is processed to determine a second frequency domain resource that is entirely located in the subband of the first time domain unit, and the repetition is performed in the second frequency domain resource in the first time domain unit; and/or
In step S104, when the first frequency domain resource for the repetition in the second time domain unit is not entirely located in an active bandwidth part of the second time domain unit, the first frequency domain resource is processed to determine a third frequency domain resource that is entirely located in the active bandwidth part of the second time domain unit, and the repetition is performed in the third frequency domain resource in the second time domain unit.

In an embodiment, a time domain unit may be one or more system frames; the time domain unit may be one or more subframes; the time domain unit may be one or more slots; the time domain unit may be one or more symbols, such as Orthogonal Frequency Division Multiplexing (OFDM) symbols.

In an embodiment, since the first frequency domain resource for repetition(s) configured by the network device for the terminal is the same in each repetition, the terminal may determine the frequency domain resource for each repetition according to the frequency domain resource of the initial transmission in the repetition(s).

In an embodiment, each repetition may be located in a different slot, and the slot(s) includes(include) a first time domain unit for the full-duplex communication and a second time domain unit not for the full-duplex communication.

In the second time domain unit, the terminal may perform the repetition in an active Bandwidth Part (active BWP) according to scheduling of the network device.

In the first time domain unit, the frequency domain resource includes an active bandwidth part and a subband, and the terminal may perform the repetition in the subband according to the scheduling of the network device. The subband is not necessarily located in the active bandwidth part. For example, the subband may be completely located in the active bandwidth part, or may be partially located in the bandwidth part, or may be completely located outside the bandwidth part.

When repetition(s) includes(include) a repetition in the first time domain unit and a repetition in the second time domain unit, some technical problems may exist. It should be noted that the first time domain unit is not used to represent one slot, but a type of slot. Similarly, the second time domain unit is not used to represent one slot, but a type of slot.

The active bandwidth part corresponding to each slot may be the same, but since only the first time domain unit is configured with a subband, the following cases may exist:
Case 1: the initial transmission is located in the second time domain unit, a certain repetition is located in the first time domain unit, and the first frequency domain resource for repetition(s) is entirely located in the active bandwidth part but not entirely located in a subband.
Case 2: the initial transmission is located in the first time domain unit, a certain repetition is located in the second time domain unit, and the first frequency domain resource for the repetition(s) is entirely located in the subband but not entirely located in the active bandwidth part.

For the above case 1, since in the first time domain unit, the terminal performs the repetition in the subband according to the scheduling of the network device, when the first frequency domain resource for the repetition is entirely located in the active bandwidth part but not entirely located in the subband, the first frequency domain resource may be processed to determine a second frequency domain resource that is entirely located in the subband. Thus, when the repetition is performed in the first time domain unit, the second frequency domain resource may be used for the repetition, thereby ensuring that the terminal can successfully complete the repetition.

For the above case 2, since in the second time domain unit, the terminal performs the repetition in the active bandwidth part according to the scheduling of the network device, when the first frequency domain resource for the repetition is entirely located in the subband but not entirely located in the bandwidth part, the first frequency domain resource may be processed to determine a third frequency domain resource that is entirely located in the subband. Thus, when the repetition is performed in the second time domain unit, the third frequency domain resource may be used for the repetition, thereby ensuring that the terminal can successfully complete the repetition.

According to an embodiment of the present disclosure, by processing the first frequency domain resource for repetition(s), it can be ensured that the repetition is performed in the second frequency domain resource that is entirely located in the subband in the first time domain unit, the repetition is performed in the third frequency domain resource that is entirely located in the active bandwidth part in the second time domain unit, thereby ensuring that the terminal can successfully complete the repetition(s).

In an embodiment, the first time domain unit includes at least one of:
an uplink slot including a downlink subband;
a flexible slot including downlink subbands;
a downlink slot including an uplink subband; or
a flexible slot including an uplink subband.

For example, in a downlink slot including an uplink subband, the terminal may perform uplink communication in the uplink subband and perform downlink communication in a frequency domain resource outside the uplink subband, thereby realizing the full-duplex communication. For example, in a flexible slot including an uplink subband, the terminal may perform uplink communication in the uplink subband and perform downlink communication in a frequency domain resource outside the uplink subband, thereby realizing the full-duplex communication. For example, in an uplink slot including a downlink subband, the terminal may perform downlink communication in the downlink subband and perform uplink communication in a frequency domain resource outside the downlink subband, thereby realizing the full-duplex communication. For example, in a flexible slot including a downlink subband, the terminal may perform downlink communication in the downlink subband and perform uplink communication in a frequency domain resource outside the downlink subband, thereby realizing the full-duplex communication.

How to determine the first time domain unit may be set as needed, including but not limited to the methods shown in the following embodiments:
In an embodiment, the network device may first configure a transmission direction (for example, a first transmission direction) of the first time domain unit through first information. The first information includes but is not limited to time division duplexing (TDD) uplink and downlink configuration (UL-DL configuration) or Slot Format Indication (SFI). The first information in the embodiment is carrier-level, that is, the first information is applicable to all BWPs in the same carrier. Based on the first information, the terminal may determine that the first time domain unit is an uplink slot (the first transmission direction is uplink) or a downlink slot (the first transmission direction is downlink).

In the subsequent communication procedure, the network device may adjust the transmission direction of the terminal in the first time domain unit through second information. For example, the network device may indicate that the transmission direction of the terminal in the first time domain unit is a second transmission direction through the second information. The second information can be dynamic scheduling signaling or semi-static configuration information, such as Radio Resource Control (RRC) signaling.

Since the second transmission direction is different from the first transmission direction, when the terminal determines that the transmission direction in the first time domain unit is the second transmission direction according to the second information, the first time domain unit may be determined to be the first time domain unit. For example, when the first transmission direction is uplink transmission and the second transmission direction is downlink transmission, the first time domain unit may be determined to be an uplink slot including a downlink subband; when the first transmission direction is downlink transmission and the second transmission direction is uplink transmission, the first time domain unit may be determined to be a downlink slot including an uplink subband.

In an embodiment, the network device may first configure the transmission direction (for example, the first transmission direction) of the first time domain unit through the TDD UL-DL configuration for a cell. The TDD UL-DL configuration for the cell is cell-level (carrier-level) and is the same for all BWPs under the same carrier. The terminal may determine, based on the first information, that the first time domain unit is an uplink slot (the first transmission direction is uplink) or a downlink slot (the first transmission direction is downlink).

In the subsequent communication procedure, the network device may adjust the transmission direction of the terminal in the first time domain unit by the TDD UL-DL configuration of a preset BWP pair. For example, the network device may indicate that the transmission direction of the terminal in the first time domain unit is the second transmission direction by the TDD UL-DL configuration of the preset BWP pair. The TDD UL-DL configuration of the preset BWP pair is BWP-level, that is, TDD UL-DL configuration may be different for different BWPs.

It should be noted that, in this case, the terminal may maintain two active BWP pairs, one is a preset BWP pair, and the other is a BWP pair other than the preset BWP pair, which can be called a normal BWP pair. The two BWP pairs may correspond to different TDD UL-DL configurations, and the terminal determines the transmission direction in the first time domain unit according to the TDD UL-DL configuration of the preset BWP pair.

The frequency domain resources corresponding to the uplink BWP and the downlink BWP in the two BWP pairs may be the same or different. For communication in the first time domain unit, the frequency domain resource is determined according to the frequency domain resource corresponding to the uplink BWP and/or downlink BWP in the preset BWP pair, and for communication in a non-first time domain unit, the frequency domain resource is determined according to the frequency domain resource corresponding to the uplink BWP and/or downlink BWP in the normal BWP pair.

The network device may also indicate the preset BWP pair in at least one BWP pair by sending indication information. Since the network device may send a BWP-level TDD UL-DL configuration to the terminal, each BWP pair corresponds to a TDD UL-DL configuration. Therefore, the network device needs to inform the terminal of the preset BWP pair in multiple BWP pairs through the indication information, so that the terminal determines the second transmission direction according to the TDD UL-DL configuration of the preset BWP pair. The preset BWP pair may be referred to as a reference BWP pair or a SBFD BWP pair.

Since the second transmission direction is different from the first transmission direction, when the terminal determines that the transmission direction in the first time domain unit is the second transmission direction according to the second information, the first time domain unit may be determined to be the first time domain unit. For example, when the first transmission direction is uplink transmission and the second transmission direction is downlink transmission, the first time domain unit may be determined to be an uplink slot including a downlink subband; when the first transmission direction is downlink transmission and the second transmission direction is uplink transmission, the first time domain unit may be determined to be a downlink slot including an uplink subband.

In an embodiment, it may be specified that a full-duplex operation is performed on a semi-static time domain resource (for example, symbol, slot) of a TDD frequency band or on a time domain resource indicated by the SFI, and the slot included in time domain resource or the slot in which the time domain resource is located may be used as the first time domain unit.

The semi-static time domain resource may be determined according to the tdd-UL-DL-ConfigurationCommon signaling sent by a base station, or may be determined according to the tdd-UL-DL-ConfigurationCommon signaling and the tdd-UL-DL-ConfigurationDedicated signaling sent by the base station.

Further, the network device may indicate the transmission direction (e.g., uplink communication, downlink communication, etc.) on the first time domain unit. For example, taking a downlink time domain resource as an example, the transmission direction of the terminal on the downlink time domain resource may be indicated in the following two methods:
Method 1: In the downlink time domain resource, the network device configures a UL subband or a DL subband for the terminal; in the UL subband, the terminal may only perform uplink transmission, and in the DL subband, the terminal may only perform uplink reception. Method 2: In the downlink time domain resource, the network device configures a UL subband or a DL subband for the terminal, and schedules a data channel or indicates a reference signal in the UL subband or the DL subband, and the terminal determines whether to perform uplink communication or downlink communication according to the indication.

The processing of the first frequency domain resource mainly includes the following processing methods such as shifting, interleaving, frequency hopping (FH) in a frequency domain. These methods are illustratively described below through several embodiments.

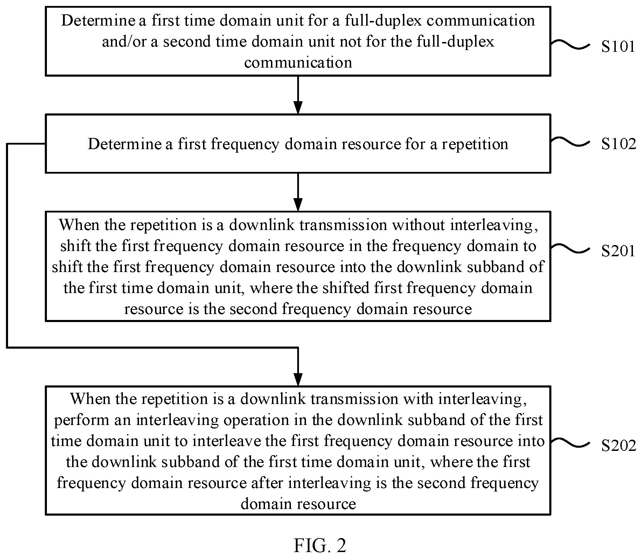

FIG. 2 is a schematic flowchart of another repetition method according to an embodiment of the present disclosure. As shown in FIG. 2, the first time domain unit includes an uplink slot or a flexible slot including a downlink subband, and processing the first frequency domain resource to determine the second frequency domain resource that is entirely located in the subband of the first time domain unit includes:
In step S201, when the repetition is a downlink transmission without interleaving, the first frequency domain resource is shifted in the frequency domain to shift the first frequency domain resource into the downlink subband of the first time domain unit, wherein the shifted first frequency domain resource is the second frequency domain resource; and/or
In step S202, when the repetition is a downlink transmission with interleaving, an interleaving operation is performed in the downlink subband of the first time domain unit to interleave the first frequency domain resource into the downlink subband of the first time domain unit, wherein the interleaved first frequency domain resource is the second frequency domain resource.

In an embodiment, for an uplink slot or a flexible slot including a downlink subband, when the repetition is a downlink transmission without interleaving, such as type0 random access (RA) Physical Downlink Shared Channel (PDSCH), type 1 RA PDSCH w/o interleaving (without interleaving), etc., if the first frequency domain resource is entirely located in the active bandwidth part but not entirely located in the downlink subband, the first frequency domain resource may be shifted. By shifting in the frequency domain, the first frequency domain resource in the first time domain unit can be entirely shifted into the downlink subband as the second frequency domain resource.

It should be noted that the amplitude of the shifting of the first frequency domain resource may be indicated by the network device or determined based on a protocol agreement.

In an embodiment, for an uplink slot or a flexible slot of a downlink subband, when the repetition is a downlink transmission with interleaving, such as type 1 RA PDSCH w/ interleaving (interleaving is on), if the first frequency domain resource is entirely located in the active bandwidth part but not entirely located in the downlink subband, an interleaving operation may be performed in the downlink subband of the first time domain unit. By performing the interleaving operation, the first frequency domain resource in the first time domain unit may be entirely interleaved into the downlink subband as the second frequency domain resource.

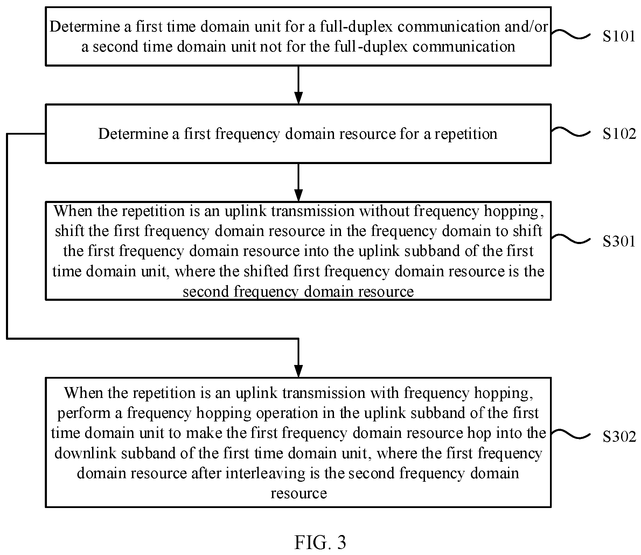

FIG. 3 is a schematic flowchart of another repetition method according to an embodiment of the present disclosure. As shown in FIG. 3, the first time domain unit includes a downlink slot or a flexible slot including an uplink subband, and processing the first frequency domain resource to determine the second frequency domain resource that is entirely located in the subband of the first time domain unit includes:
In step S301, when the repetition is an uplink transmission without frequency hopping, the first frequency domain resource is shifted in the frequency domain to shift the first frequency domain resource into the uplink subband of the first time domain unit, wherein the shifted first frequency domain resource is the second frequency domain resource; and/or
In step S302, when the repetition is an uplink transmission with frequency hopping, a frequency hopping operation is performed in the uplink subband of the first time domain unit to make the first frequency domain resource hop into the downlink subband of the first time domain unit, wherein the first frequency domain resource after interleaving is the second frequency domain resource.

In an embodiment, for a downlink slot or a flexible slot including an uplink subband, when the repetition is an uplink transmission without frequency hopping, such as a Physical Uplink Shared Channel (PUSCH) w/o FP (without frequency hopping), if the first frequency domain resource is entirely located in the active bandwidth part but not entirely located in the uplink subband, the first frequency domain resource may be shifted. By shifting in the frequency domain, the first frequency domain resource in the first time domain unit may be entirely shifted into the downlink subband as the second frequency domain resource.

In an embodiment, for a downlink slot or a flexible slot including an uplink subband, when the repetition is an uplink transmission with frequency hopping, such as type 1 RA PUSCH w/ FP (frequency hopping is on), if the first frequency domain resource is entirely located in the active bandwidth part but not entirely located in the uplink subband, a frequency hopping operation may be performed in the downlink subband of the first time domain unit. By performing the frequency hopping operation, the first frequency domain resource in the first time domain unit may entirely hop to the downlink subband as the second frequency domain resource.

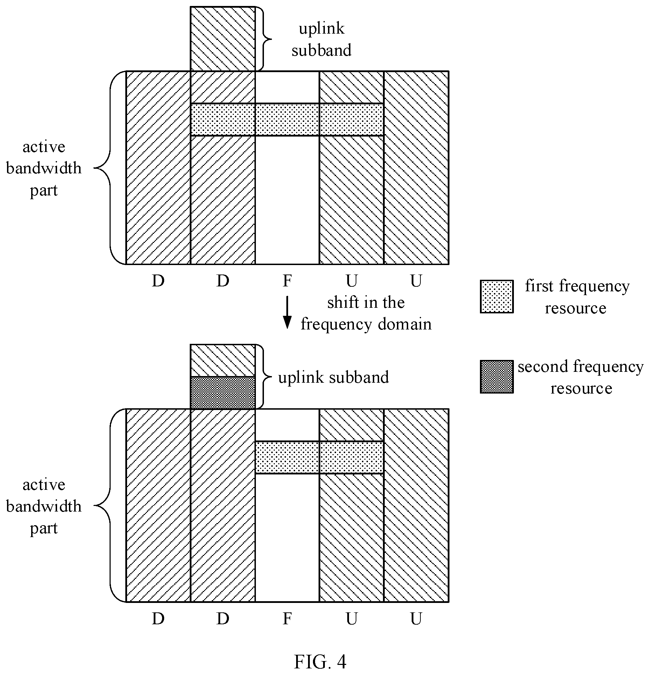

FIG. 4 is a schematic diagram showing a frequency domain resource according to an embodiment of the present disclosure.

As shown in FIG. 4, taking 5 slots as an example, the slot structure is DDFUU, where D represents a downlink slot, F represents a flexible slot, and U represents an uplink slot. The slot structure may be determined according to a cell specific tdd-UL-DL-ConfigurationCommon.

The second slot is a first time domain unit and may be used for the full-duplex communication, in which an uplink subband is configured, but the uplink subband is outside the active bandwidth part. The third and fourth slots are second time domain units and are used for uplink transmission, not for the full-duplex communication.

For example, if the first frequency domain resource for the repetition is entirely located in the active bandwidth part but not entirely located in the uplink subband, if the repetition is an uplink transmission without frequency hopping, the first frequency domain resource may be shifted in the first time domain unit, and the first frequency domain resource may be shifted to the uplink subband to obtain the second frequency domain resource. The frequency domain range of the second frequency domain resource may be the same as the frequency domain range of the first frequency domain resource, but the starting positions are different.

Accordingly, the terminal still performs repetitions on the first frequency domain resource in the third and fourth slots, and performs a repetition on the second frequency domain resource in the second slot.

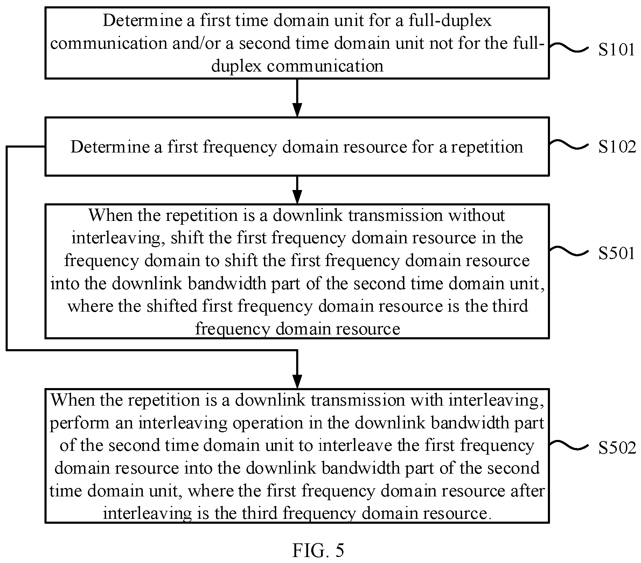

FIG. 5 is a schematic flowchart of another repetition method according to an embodiment of the present disclosure. As shown in FIG. 5, processing the first frequency domain resource to determine the third frequency domain resource that is entirely located in the active bandwidth part of the second time domain unit includes:
In step S501, when the repetition is a downlink transmission without interleaving, the first frequency domain resource is shifted in the frequency domain to shift the first frequency domain resource into the downlink bandwidth part of the second time domain unit, wherein the shifted first frequency domain resource is the third frequency domain resource; and/or
In step S502, when the repetition is a downlink transmission with interleaving, an interleaving operation is performed in the downlink bandwidth part of the second time domain unit to interleave the first frequency domain resource into the downlink bandwidth part of the second time domain unit, wherein the first frequency domain resource after interleaving is the third frequency domain resource.

In an embodiment, for the second time domain unit, when the repetition is a downlink transmission without interleaving, such as type 0 RA PDSCH, type 1 RA PDSCH w/o interleaving, etc., if the first frequency domain resource is entirely located in the downlink subband but not entirely located in the active bandwidth part, the first frequency domain resource may be shifted. By shifting in the frequency domain, the first frequency domain resource in the first time domain unit can be entirely shifted to the active bandwidth part as the third frequency domain resource.

In an embodiment, for the second time domain unit, when the repetition is a downlink transmission with interleaving, such as type 1 RA PDSCH w/ interleaving, if the first frequency domain resource is entirely located in the downlink subband but not entirely located in the active bandwidth part, an interleaving operation may be performed in the active bandwidth part of the first time domain unit. By performing the interleaving operation, the first frequency domain resource in the first time domain unit can be entirely interleaved into the active bandwidth part as the third frequency domain resource.

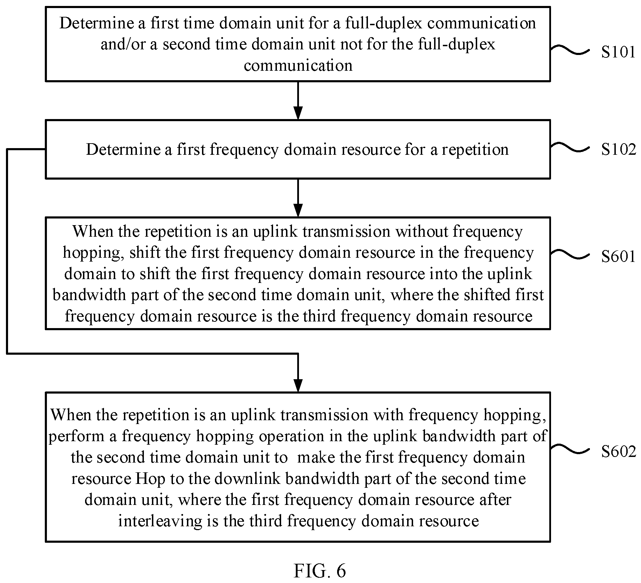

FIG. 6 is a schematic flowchart of another repetition method according to an embodiment of the present disclosure. As shown in FIG. 6, processing the first frequency domain resource to determine the third frequency domain resource that is entirely located in the active bandwidth part of the second time domain unit includes:
In step S601, when the repetition is an uplink transmission without frequency hopping, the first frequency domain resource is shifted in the frequency domain to shift the first frequency domain resource into the uplink bandwidth part of the second time domain unit, wherein the shifted first frequency domain resource is the third frequency domain resource; and/or
In step S602, when the repetition is an uplink transmission with frequency hopping, a frequency hopping operation is performed in the uplink bandwidth part of the second time domain unit to make the first frequency domain resource hop to the downlink bandwidth part of the second time domain unit, wherein the first frequency domain resource after interleaving is the third frequency domain resource.

In an embodiment, for the second time domain unit, when the repetition is an uplink transmission without frequency hopping, such as PUSCH w/o FP, if the first frequency domain resource is entirely located in the uplink subband but not entirely located in the active bandwidth part, the first frequency domain resource may be shifted. By shifting in the frequency domain, the first frequency domain resource in the first time domain unit can be entirely shifted to the active bandwidth part as the third frequency domain resource.

In an embodiment, for the second time domain unit, when the repetition is an uplink transmission with frequency hopping, such as type 1 RA PUSCH w/ FP, if the first frequency domain resource is entirely located in the uplink subband but not entirely located in the active bandwidth part, a frequency hopping operation may be performed in the active bandwidth part of the first time domain unit. By performing the frequency hopping operation, the first frequency domain resource in the first time domain unit may entirely hop to the downlink subband as the third frequency domain resource.

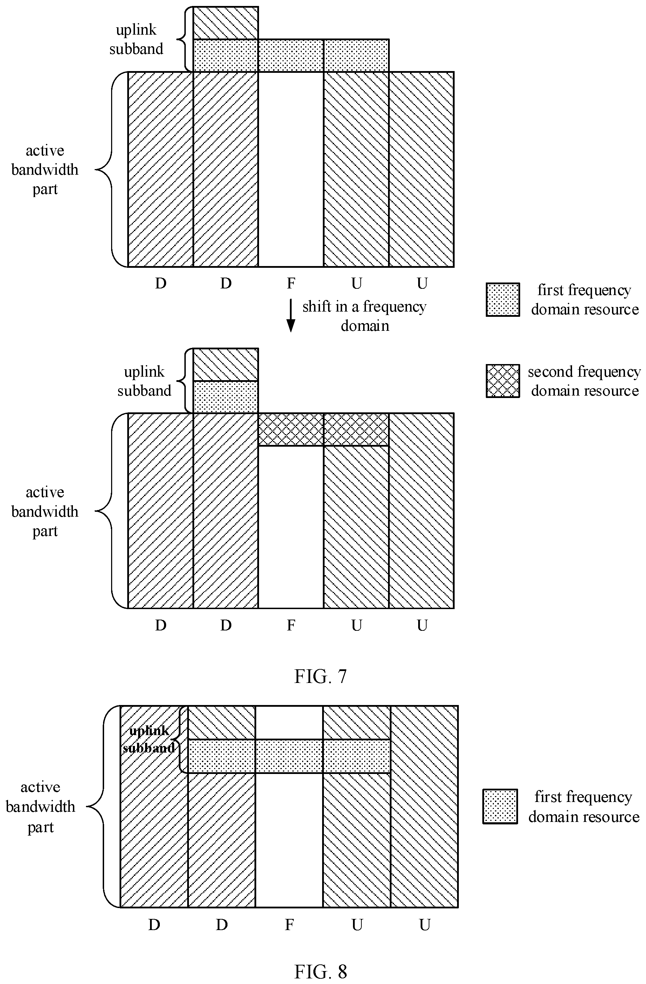

FIG. 7 is a schematic diagram showing another frequency domain resource according to an embodiment of the present disclosure.

As shown in FIG. 7, taking 5 slots as an example, the slot structure is DDFUU, where D represents a downlink slot, F represents a flexible slot, and U represents an uplink slot.

The second slot is a first time domain unit and may be used for the full-duplex communication, in which an uplink subband is configured, but the uplink subband is outside the active bandwidth part. The third and fourth slots are second time domain units and are used for downlink transmission, not for the full-duplex communication.

For example, if the first frequency domain resource used for a repetition is entirely located in the uplink subband but not entirely located in the active bandwidth part, if the repetition is an uplink transmission without frequency hopping, the first frequency domain resource may be shifted in the second time domain unit, and the first frequency domain resource may be shifted to the active bandwidth part to obtain the third frequency domain resource. The frequency domain range of the third frequency domain resource may be the same as the frequency domain range of the first frequency domain resource, but the starting positions are different.

Accordingly, the terminal performs repetitions on the third frequency domain resource in the third and fourth slots, and still performs a repetition on the first frequency domain resource in the second slot.

FIG. 8 is a schematic diagram showing yet another frequency domain resource according to an embodiment of the present disclosure.

As shown in FIG. 8, taking 5 slots as an example, the slot structure is DDFUU, where D represents a downlink slot, F represents a flexible slot, and U represents an uplink slot.

The first slot is a first time domain unit and can be used for the full-duplex communication, in which an uplink subband is configured, but the uplink subband is outside the active bandwidth part. The second slot is a second time domain unit, which is only used for downlink transmission, not for the full-duplex communication.

For example, if the first frequency domain resource used for a repetition is entirely located in the uplink subband and entirely located in the active bandwidth part, there is no need to process the first frequency domain resource, that is, the terminal performs repetitions on the first frequency domain resource in the first slot and the second slot.

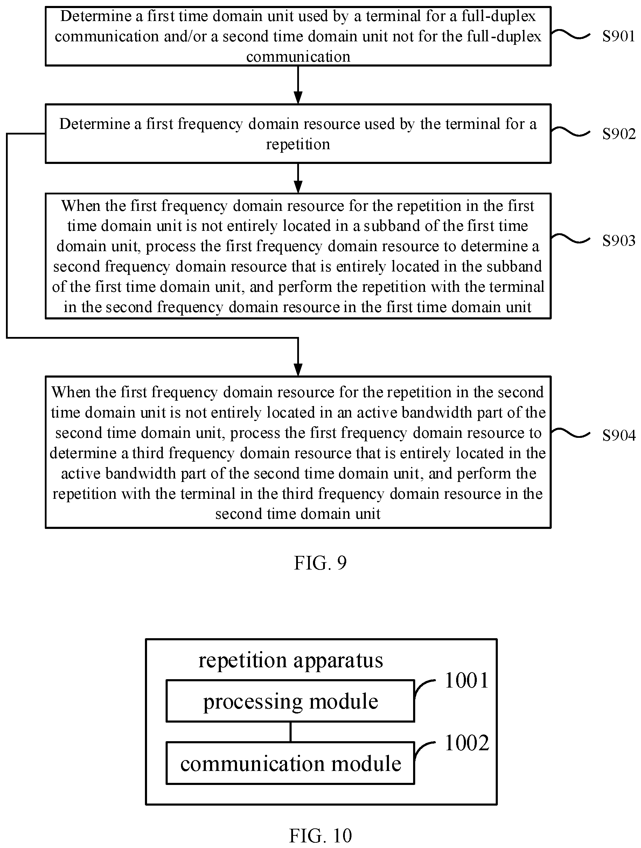

FIG. 9 is a schematic flowchart of a repetition method according to an embodiment of the present disclosure. The repetition method shown in this embodiment may be performed by a network device. The network device may communicate with a terminal, the network device includes but is not limited to a base station in a communication system such as a 4G base station, a 5G base station, or a 6G base station, etc., and the terminal includes but is not limited to a communication apparatus such as a mobile phone, a tablet computer, a wearable device, a sensor, an Internet of Things device, etc..

As shown in FIG. 9, the repetition method may include the following steps:
In step S901, a first time domain unit used by a terminal for a full-duplex communication and/or a second time domain unit not for the full-duplex communication is determined.
In step S902, a first frequency domain resource used by the terminal for a repetition is determined.
In step S903, when the first frequency domain resource for the repetition in the first time domain unit is not entirely located in a subband of the first time domain unit, the first frequency domain resource is processed to determine a second frequency domain resource that is entirely located in the subband of the first time domain unit, and the repetition is performed with the terminal in the second frequency domain resource in the first time domain unit; and/or
In step S904, when the first frequency domain resource for the repetition in the second time domain unit is not entirely located in an active bandwidth part of the second time domain unit, the first frequency domain resource is processed to determine a third frequency domain resource that is entirely located in the active bandwidth part of the second time domain unit, and the repetition is performed with the terminal in the third frequency domain resource in the second time domain unit.

In an embodiment, since the first frequency domain resource for repetition(s) configured by the network device for the terminal is the same in each repetition, the terminal may determine the frequency domain resource for each repetition according to the frequency domain resource for the initial transmission in the repetition(s).

In an embodiment, each repetition may be located in a different slot, and the slot(s) includes(include) a first time domain unit for the full-duplex communication and a second time domain unit not for full-duplex communication.

In the second time domain unit, the terminal may perform a repetition in the active Bandwidth Part (active BWP) according to the scheduling of the network device.

In the first time domain unit, the frequency domain resource includes an active bandwidth part and a subband, and the terminal may perform a repetition in the subband according to the scheduling of the network device. The subband is not necessarily located in the active bandwidth part. For example, the subband may be completely located in the active bandwidth part, or may be partially located in the bandwidth part, or may be completely located outside the bandwidth part.

When repetition(s) includes(include) a repetition in the first time domain unit and a repetition in the second time domain unit, some technical problems may exist. It should be noted that the first time domain unit is not used to represent one slot, but a type of slot. Similarly, the second time domain unit is not used to represent one slot, but a type of slot.

The active bandwidth part corresponding to each slot may be the same, but since only the first time domain unit is configured with a subband, the following cases may exist:
Case 1: the initial transmission is located in the second time domain unit, a certain repetition is located in the first time domain unit, and the first frequency domain resource used for repetition(s) is entirely located in the active bandwidth part but not entirely located in the subband.
Case 2: the initial transmission is located in the first time domain unit, a certain repetition is located in the second time domain unit, and the first frequency domain resource for the repetition(s) is entirely located in the subband but not entirely located in the active bandwidth part.

For the above case 1, since in the first time domain unit, the terminal performs a repetition in the subband according to the scheduling of the network device, when the first frequency domain resource for the repetition is entirely located in the active bandwidth part but not entirely located in the subband, the first frequency domain resource may be processed to determine a second frequency domain resource that is entirely located in the subband. Thus, when the repetition is performed in the first time domain unit, the second frequency domain resource may be used for the repetition, thereby ensuring that the terminal can successfully complete the repetition.

For the above case 2, since in the second time domain unit, the terminal performs a repetition in the active bandwidth part according to the scheduling of the network device, when the first frequency domain resource for the repetition is entirely located in the subband but not entirely located in the bandwidth part, the first frequency domain resource may be processed to determine a third frequency domain resource that is entirely located in the subband. Thus, when performing repetition in the second time domain unit, the third frequency domain resource may be used for the repetition, thereby ensuring that the terminal can successfully complete the repetition.

According to the embodiments of the present disclosure, by processing the first frequency domain resource for a repetition, it can be ensured that a repetition is performed on the second frequency domain resource that is entirely located in the subband in the first time domain unit, a repetition is performed on the third frequency domain resource that is entirely located in the active bandwidth part in the second time domain unit, thereby ensuring that the network device can successfully complete the repetition(s).

In an embodiment, the first time domain unit includes at least one of:
an uplink slot including a downlink subband;
a flexible slot including a downlink subband;
a downlink slot including an uplink subband; or
a flexible slot including an uplink subband.

For example, in a downlink slot including an uplink subband, the terminal may perform uplink communication in the uplink subband and perform downlink communication in a frequency domain resource outside the uplink subband, thereby realizing the full-duplex communication. For example, in a flexible slot including an uplink subband, the terminal may perform uplink communication in the uplink subband and perform downlink communication in a frequency domain resource outside the uplink subband, thereby realizing the full-duplex communication. For example, in an uplink slot including a downlink subband, the terminal may perform downlink communication in the downlink subband and perform uplink communication in a frequency domain resource outside the downlink subband, thereby realizing the full-duplex communication. For example, in a flexible slot including a downlink subband, the terminal may perform downlink communication in the downlink subband and perform uplink communication in a frequency domain resource outside the downlink subband, thereby realizing the full-duplex communication.

In an embodiment, the first time domain unit includes an uplink slot or a flexible slot including a downlink subband, and processing the first frequency domain resource to determine the second frequency domain resource that is entirely located in the subband of the first time domain unit includes:
when the repetition is a downlink transmission without interleaving, shifting the first frequency domain resource in a frequency domain to shift the first frequency domain resource into the downlink subband of the first time domain unit, wherein the shifted first frequency domain resource is the second frequency domain resource; and/or
when the repetition is a downlink transmission with interleaving, performing an interleaving operation in the downlink subband of the first time domain unit to interleave the first frequency domain resource into the downlink subband of the first time domain unit, wherein the first frequency domain resource after interleaving is the second frequency domain resource.

In an embodiment, for an uplink slot or a flexible slot including a downlink subband, when the repetition is a downlink transmission without interleaving, such as type 0 RA PDSCH, type 1 RA PDSCH w/o interleaving, etc., if the first frequency domain resource is entirely located in the active bandwidth part but not entirely located in the downlink subband, the first frequency domain resource may be shifted. By shifting in the frequency domain, the first frequency domain resource in the first time domain unit may be entirely shifted to the downlink subband as the second frequency domain resource.

In an embodiment, for an uplink slot or a flexible slot of a downlink subband, when the repetition is a downlink transmission with interleaving, such as type 1 RA PDSCH w/ interleaving (interleaving is on), if the first frequency domain resource is entirely located in the active bandwidth part but not entirely located in the downlink subband, an interleaving operation may be performed in the downlink subband of the first time domain unit. By performing the interleaving operation, the first frequency domain resource in the first time domain unit may be entirely interleaved into the downlink subband as the second frequency domain resource.

In an embodiment, the first time domain unit includes a downlink slot or a flexible slot including an uplink subband, and processing the first frequency domain resource to determine the second frequency domain resource that is entirely located in the subband of the first time domain unit includes:
when the repetition is an uplink transmission without frequency hopping, shifting the first frequency domain resource in the frequency domain to shift the first frequency domain resource into the uplink subband of the first time domain unit, wherein the shifted first frequency domain resource is the second frequency domain resource; and/or
when the repetition is an uplink transmission with frequency hopping, performing a frequency hopping operation in the uplink subband of the first time domain unit to make the first frequency domain resource hop to the downlink subband of the first time domain unit, wherein the first frequency domain resource after interleaving is the second frequency domain resource.

In an embodiment, for a downlink slot or a flexible slot including an uplink subband, when the repetition is an uplink transmission without frequency hopping, such as PUSCH w/o FP, if the first frequency domain resource is entirely located in the active bandwidth part but not entirely located in the uplink subband, the first frequency domain resource may be shifted. By shifting in the frequency domain, the first frequency domain resource in the first time domain unit may be entirely shifted to the downlink subband as the second frequency domain resource.

In an embodiment, for a downlink slot or a flexible slot including an uplink subband, when the repetition is an uplink transmission with frequency hopping, such as type 1 RA PUSCH w/ FP, if the first frequency domain resource is entirely located in the active bandwidth part but not entirely located in the uplink subband, a frequency hopping operation may be performed in the downlink subband of the first time domain unit. By performing the frequency hopping operation, the first frequency domain resource in the first time domain unit may entirely hop to the downlink subband as the second frequency domain resource.

In an embodiment, processing the first frequency domain resource to determine third frequency domain resource that is entirely located in the active bandwidth part of the second time domain unit includes:
when the repetition is a downlink transmission without interleaving, shifting the first frequency domain resource in the frequency domain to shift the first frequency domain resource to the downlink bandwidth part of the second time domain unit, wherein the shifted first frequency domain resource is the third frequency domain resource; and/or
when the repetition is a downlink transmission with interleaving, performing an interleaving operation in the downlink bandwidth part of the second time domain unit to interleave the first frequency domain resource into the downlink bandwidth part of the second time domain unit, wherein the first frequency domain resource after interleaving is the third frequency domain resource.

In an embodiment, for the second time domain unit, when the repetition is a downlink transmission without interleaving, such as type 0 RA PDSCH, type 1 RA PDSCH w/o interleaving, etc., if the first frequency domain resource is entirely located in the downlink subband but not entirely located in the active bandwidth part, the first frequency domain resource may be shifted. By shifting in the frequency domain, the first frequency domain resource in the first time domain unit may be entirely shifted to the active bandwidth part as the third frequency domain resource.

In an embodiment, for the second time domain unit, when the repetition is a downlink transmission with interleaving, such as type 1 RA PDSCH w/ interleaving, if the first frequency domain resource is entirely located in the downlink subband but not entirely located in the active bandwidth part, an interleaving operation may be performed in the active bandwidth part of the first time domain unit. By performing the interleaving operation, the first frequency domain resource in the first time domain unit may be entirely interleaved into the active bandwidth part as the third frequency domain resource.

In an embodiment, processing the first frequency domain resource to determine the third frequency domain resource that is entirely located in the active bandwidth part of the second time domain unit includes:
when the repetition is an uplink transmission without frequency hopping, shifting the first frequency domain resource in the frequency domain to shift the first frequency domain resource to the uplink bandwidth part of the second time domain unit, wherein the shifted first frequency domain resource is the third frequency domain resource; and/or
when the repetition is an uplink transmission with frequency hopping, performing a frequency hopping operation in the uplink bandwidth part of the second time domain unit to make the first frequency domain resource hop to the downlink bandwidth part of the second time domain unit, wherein the first frequency domain resource after interleaving is the third frequency domain resource.

In an embodiment, for the second time domain unit, when the repetition is an uplink transmission without frequency hopping, such as PUSCH w/o FP, if the first frequency domain resource is entirely located in the uplink subband but not entirely located in the active bandwidth part, the first frequency domain resource may be shifted. By shifting in the frequency domain, the first frequency domain resource in the first time domain unit may be entirely shifted to the active bandwidth part as the third frequency domain resource.

In an embodiment, for the second time domain unit, when the repetition is an uplink transmission with frequency hopping, such as type 1 RA PUSCH w/ FP, if the first frequency domain resource is entirely located in the uplink subband but not entirely located in the active bandwidth part, a frequency hopping operation may be performed in the active bandwidth part of the first time domain unit. By performing the frequency hopping operation, the first frequency domain resource in the first time domain unit may entirely hop to the downlink subband as the third frequency domain resource.

An embodiment of the present disclosure also proposes a repetition system, including a terminal and a network side device. The terminal is configured to implement the repetition method performed by the terminal as described in any of the above embodiments, and the network device is configured to implement the repetition method performed by the network device as described in any of the above embodiments.

Corresponding to the aforementioned embodiments of the repetition methods, the present disclosure also provides embodiments of repetition apparatuses.

FIG. 10 is a schematic block diagram of a repetition apparatus according to an embodiment of the present disclosure. The repetition apparatus shown in this embodiment may be a terminal, or an apparatus formed by a module in a terminal, and the terminal includes but is not limited to a communication apparatus such as a mobile phone, a tablet computer, a wearable device, a sensor, an Internet of Things device etc. The terminal may communicate with a network device, and the network device includes but is not limited to a network device in a communication system such as 4G, 5G, or 6G, for example the network device is a base station, a core network, etc.

As shown in FIG10, the repetition apparatus includes:
a processing module 1001 configured to determine a first time domain unit for a full-duplex communication and/or a second time domain unit not for the full-duplex communication; determine a first frequency domain resource for a repetition; and when the first frequency domain resource for the repetition in the first time domain unit is not entirely located in a subband of the first time domain unit, process the first frequency domain resource to determine a second frequency domain resource that is entirely located in the subband of the first time domain unit; and/or, when the first frequency domain resource for the repetition in the second time domain unit is not entirely located in an active bandwidth part of the second time domain unit, process the first frequency domain resource to determine a third frequency domain resource that is entirely located in the active bandwidth part of the second time domain unit; and
a communication module 1002 configured to perform the repetition in the second frequency domain resource in the first time domain unit; and/or perform the repetition in the third frequency domain resource in the second time domain unit.

In an embodiment, the first time domain unit includes at least one of:
an uplink slot including a downlink subband;
a flexible slot including a downlink subband;
a downlink slot including an uplink subband; or
a flexible slot including an uplink subband.

In an embodiment, the first time domain unit includes an uplink slot or a flexible slot including a downlink subband, and the processing module is configured to: when the repetition is a downlink transmission without interleaving, shift the first frequency domain resource in the frequency domain to shift the first frequency domain resource to the downlink subband of the first time domain unit, wherein the shifted first frequency domain resource is the second frequency domain resource; and/or, when the repetition is a downlink transmission with interleaving, perform an interleaving operation in the downlink subband of the first time domain unit to interleave the first frequency domain resource to the downlink subband of the first time domain unit, wherein the first frequency domain resource after interleaving is the second frequency domain resource.

In an embodiment, the first time domain unit includes a downlink slot or a flexible slot including an uplink subband, and the processing module is configured to: when the repetition is an uplink transmission without frequency hopping, shift the first frequency domain resource in the frequency domain to shift the first frequency domain resource to the uplink subband of the first time domain unit, wherein the shifted first frequency domain resource is the second frequency domain resource; and/or, when the repetition is an uplink transmission with frequency hopping, perform a frequency hopping operation in the uplink subband of the first time domain unit to make the first frequency domain resource hop to the downlink subband of the first time domain unit, wherein the first frequency domain resource after interleaving is the second frequency domain resource.

In an embodiment, the processing module is configured to: when the repetition is a downlink transmission without interleaving, shift the first frequency domain resource in the frequency domain to shift the first frequency domain resource to a downlink bandwidth part of the second time domain unit, wherein the shifted first frequency domain resource is the third frequency domain resource; and when the repetition is a downlink transmission with interleaving, perform an interleaving operation in the downlink bandwidth part of the second time domain unit to interleave the first frequency domain resource to the downlink bandwidth part of the second time domain unit, wherein the first frequency domain resource after interleaving is the third frequency domain resource.

In an embodiment, the processing module is configured to: when the repetition is an uplink transmission without frequency hopping, shift the first frequency domain resource in the frequency domain to shift the first frequency domain resource to the uplink bandwidth part of the second time domain unit, wherein the shifted first frequency domain resource is the third frequency domain resource; and when the repetition is an uplink transmission with frequency hopping, perform a frequency hopping operation in the uplink bandwidth part of the second time domain unit to make the first frequency domain resource hop to the downlink bandwidth part of the second time domain unit, wherein the first frequency domain resource after interleaving is the third frequency domain resource.

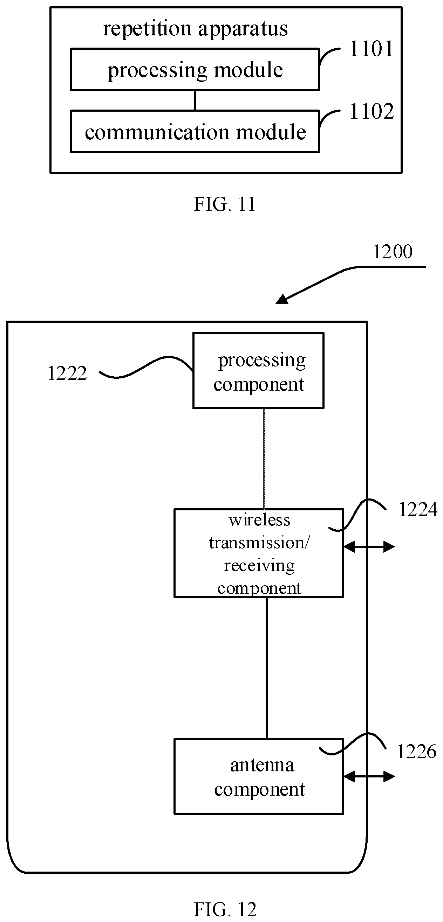

FIG. 11 is a schematic block diagram of a repetition apparatus according to an embodiment of the present disclosure. The repetition apparatus shown in this embodiment may be a network device, or an apparatus formed by a module in a network device, and the network device may communicate with a terminal, and the terminal includes but is not limited to a communication apparatus such as a mobile phone, a tablet computer, a wearable device, a sensor, an Internet of Things device. The network device includes but is not limited to a network device in a communication system such as 4G, 5G, 6G, for example, the network device is a base station, a core network, etc.

As shown in FIG. 11, the repetition apparatus includes:
a processing module 1101 configured to: determine a first time domain unit used by a terminal for a full-duplex communication and/or a second time domain unit not for the full-duplex communication; determine a first frequency domain resource used by the terminal for a repetition; and when the first frequency domain resource for the repetition in the first time domain unit is not entirely located in a subband of the first time domain unit, process the first frequency domain resource to determine a second frequency domain resource that is entirely located in the subband of the first time domain unit; and/or, when the first frequency domain resource for the repetition in the second time domain unit is not entirely located in an active bandwidth part of the second time domain unit, process the first frequency domain resource to determine a third frequency domain resource that is entirely located in the active bandwidth part of the second time domain unit; and
a communication module 1102 configured to: perform the repetition with the terminal in the second frequency domain resource in the first time domain unit; and/or perform the repetition with the terminal in the third frequency domain resource in the second time domain unit.

In an embodiment, the first time domain unit includes at least one of:
an uplink slot including a downlink subband;
a flexible slot including a downlink subband;
a downlink slot including an uplink subband; or
a flexible slot including an uplink subband.

In an embodiment, the first time domain unit includes an uplink slot or a flexible slot including a downlink subband, and the processing module is configured to: when the repetition is a downlink transmission without interleaving, shift the first frequency domain resource in the frequency domain to shift the first frequency domain resource to the downlink subband of the first time domain unit, wherein the shifted first frequency domain resource is the second frequency domain resource; and/or, when the repetition is a downlink transmission with interleaving, perform an interleaving operation in the downlink subband of the first time domain unit to interleave the first frequency domain resource to the downlink subband of the first time domain unit, wherein the first frequency domain resource after interleaving is the second frequency domain resource.

In an embodiment, the first time domain unit includes a downlink slot or a flexible slot including an uplink subband, and the processing module is configured to: when the repetition is an uplink transmission without frequency hopping, shift the first frequency domain resource in the frequency domain to shift the first frequency domain resource to the uplink subband of the first time domain unit, wherein the shifted first frequency domain resource is the second frequency domain resource; and/or, when the repetition is an uplink transmission with frequency hopping, perform a frequency hopping operation in the uplink subband of the first time domain unit to make the first frequency domain resource hop to the downlink subband of the first time domain unit, wherein the first frequency domain resource after interleaving is the second frequency domain resource.

In an embodiment, the processing module is configured to: when the repetition is a downlink transmission without interleaving, shift the first frequency domain resource in the frequency domain to shift the first frequency domain resource to the downlink bandwidth part of the second time domain unit, wherein the shifted first frequency domain resource is the third frequency domain resource; and/or when the repetition is a downlink transmission with interleaving, perform an interleaving operation in the downlink bandwidth part of the second time domain unit to interleave the first frequency domain resource to the downlink bandwidth part of the second time domain unit, wherein the first frequency domain resource after interleaving is the third frequency domain resource.

In an embodiment, the processing module is configured to: when the repetition is an uplink transmission without frequency hopping, shift the first frequency domain resource in the frequency domain to shift the first frequency domain resource to the uplink bandwidth part of the second time domain unit, wherein the shifted first frequency domain resource is the third frequency domain resource; and/or, when the repetition is an uplink transmission with frequency hopping, perform a frequency hopping operation in the uplink bandwidth part of the second time domain unit to make the first frequency domain resource hop to the downlink bandwidth part of the second time domain unit, wherein the first frequency domain resource after interleaving is the third frequency domain resource.

Regarding the apparatuses in the above embodiments, the specific manner in which each module performs the operation(s) has been described in detail in the embodiments of relevant methods, and will not be elaborated here.

For the apparatus embodiments, they basically corresponds to the method embodiments, and for relevant parts, reference may be made to a part of descriptions of the method embodiments. The apparatus embodiments described above are only illustrative, where the modules described as separate components may or may not be physically separated, and the components displayed as modules may or may not be physical modules, that is, they may be located in one place, or they may be distributed on multiple network modules. A part or all of the modules may be selected according to actual needs to achieve the purpose(s) of the solution(s) of the embodiments, and those of ordinary skill in this art can understand and implement the solutions without paying creative work.

An embodiment of the present disclosure further proposes a communication apparatus, including: a processor; and a memory configured to store a computer program. When the computer program is executed by the processor, the repetition method performed by the terminal as described in any one of the above embodiments is implemented.

An embodiment of the present disclosure further proposes a communication apparatus, including: a processor; and a memory configured to store a computer program. When the computer program is executed by the processor, the repetition method performed by the network device as described in any one of the above embodiments is implemented.

An embodiment of the present disclosure further proposes a computer-readable storage medium storing a computer program. When the computer program is executed by a processor, the repetition method performed by a terminal as described in any one of the above embodiments is implemented.

An embodiment of the present disclosure further provides a computer-readable storage medium storing a computer program. When the computer program is executed by a processor, the repetition method performed by a network device as described in any one of the above embodiments is implemented.

As shown in FIG. 12, FIG. 12 is a schematic block diagram of an apparatus 1200 for repetition according to an embodiment of the present disclosure. The apparatus 1200 may be provided as a base station. Referring to FIG. 12, the apparatus 1200 includes a processing component 1222, a wireless transmission/reception component 1224, an antenna component 1226, and a signal processing part specific to a wireless interface, and the processing component 1222 may further include one or more processors. One of the processors in the processing component 1222 may be configured to implement the repetition method performed by a network device as described in any one of the above embodiments.

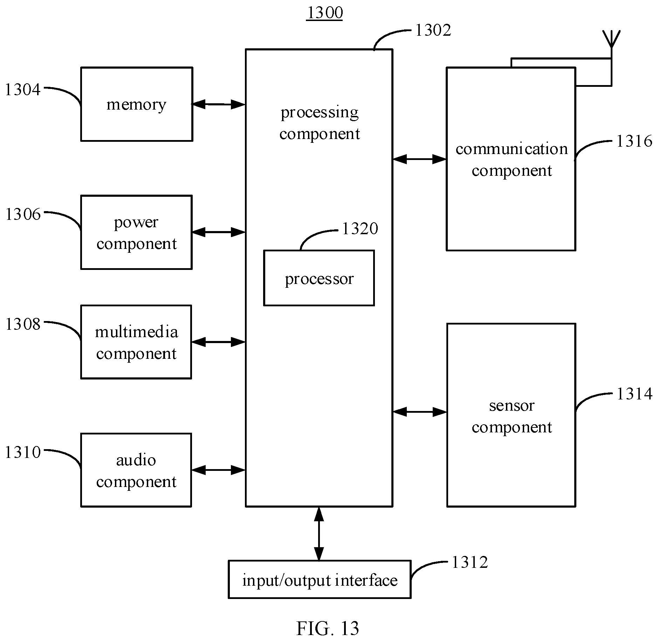

FIG. 13 is a schematic block diagram of an apparatus 1300 for repetition according to an example embodiment. For example, the apparatus 1300 may be a mobile phone, a computer, digital broadcast user equipment, a messaging device, a gaming console, a tablet, a medical device, exercise equipment, a personal digital assistant, and the like.

Referring to FIG. 13, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communications, camera operations, and recording operations. The processing component 1302 may include one or more processors 1320 to execute instructions to perform all or part of the steps in the above described repetition methods performed by a terminal. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the apparatus 1300. Examples of such data include instructions for any applications or methods operated on the apparatus 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power management system, one or more power sources, and any other components associated with the generation, management, and distribution of power in the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the apparatus 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the apparatus 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keypad, of the apparatus 1300, a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the apparatus 1300 and other devices. The apparatus 1300 can access a wireless network based on a communication standard, such as WiFi, 2G, 3G, 4G LTE, or 5G NR, or a combination thereof. In one example embodiment, the communication component 1316 receives a broadcast signal or broadcast associated information from an external broadcast management system via a broadcast channel. In one example embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described repetition methods performed by a terminal.

In example embodiments, there is also provided a non-transitory computer-readable storage medium including instructions, such as the memory 1304 including instructions executable by the processor 1320 in the apparatus 1300, for performing the above-described repetition methods performed by a terminal. For example, the non-transitory computer-readable storage medium may be a ROM, a Random Access Memory (RAM), a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

It should be noted that relational terms such as first and second, etc. are only used herein to distinguish one entity or operation from another entity or operation, and do not necessarily require or imply any such actual relationship or order between these entities or operations. The terms "include", "comprise" or any other variants thereof are intended to cover non-exclusive inclusion, so that a process, method, article or device including a series of elements includes not only those elements, but also other element(s) not explicitly listed, or also includes elements inherent to such process, method, article or device. In the absence of further limitation, an element defined by the statement "comprising/including a..." do not exclude the presence of other identical element(s) in the process, method, article or device including the element.

The methods and apparatuses provided in the embodiments of the present disclosure are introduced in detail above. Specific examples are used herein to illustrate the principles and implementations of the present disclosure. The description of the above embodiments is only used to help understand the methods of the present disclosure and its core idea(s). At the same time, for those skilled in the art, according to the idea of the present disclosure, there will be changes in the specific implementations and application scopes. In summary, the content of the specification should not be understood as a limitation on the present disclosure.

## Claims

1. A repetition method, performed by a terminal, the method comprising:
determining a first time domain unit for a full-duplex communication and/or a second time domain unit not for the full-duplex communication;
determining a first frequency domain resource for a repetition;
when the first frequency domain resource for the repetition in the first time domain unit is not entirely located in a subband of the first time domain unit, processing the first frequency domain resource to determine a second frequency domain resource that is entirely located in the subband of the first time domain unit, and performing the repetition in the second frequency domain resource in the first time domain unit; and/or
when the first frequency domain resource for the repetition in the second time domain unit is not entirely located in an active bandwidth part of the second time domain unit, processing the first frequency domain resource to determine a third frequency domain resource that is entirely located in the active bandwidth part of the second time domain unit, and performing the repetition in the third frequency domain resource in the second time domain unit.

2. The method according to claim 1, wherein the first time domain unit comprises at least one of:
an uplink slot comprising a downlink subband;
a flexible slot comprising a downlink subband;
a downlink slot comprising an uplink subband; or
a flexible slot comprising an uplink subband.

3. The method according to claim 2, wherein the first time domain unit comprises the uplink slot or the flexible slot comprising the downlink subband, and processing the first frequency domain resource to determine the second frequency domain resource that is entirely located in the subband of the first time domain unit comprises:
when the repetition is a downlink transmission without interleaving, shifting the first frequency domain resource in a frequency domain to shift the first frequency domain resource into the downlink subband of the first time domain unit, wherein the shifted first frequency domain resource is the second frequency domain resource; and/or
when the repetition is a downlink transmission with interleaving, performing an interleaving operation in the downlink subband of the first time domain unit to interleave the first frequency domain resource into the downlink subband of the first time domain unit, wherein the first frequency domain resource after interleaving is the second frequency domain resource.

4. The method according to claim 2, wherein the first time domain unit comprises the downlink slot or the flexible slot comprising the uplink subband, and processing the first frequency domain resource to determine the second frequency domain resource that is entirely located in the subband of the first time domain unit comprises:
when the repetition is an uplink transmission without frequency hopping, shifting the first frequency domain resource in a frequency domain to shift the first frequency domain resource into the uplink subband of the first time domain unit, wherein the shifted first frequency domain resource is the second frequency domain resource; and/or
when the repetition is an uplink transmission with frequency hopping, performing a frequency hopping operation in the uplink subband of the first time domain unit to make the first frequency domain resource hop to the downlink subband of the first time domain unit, wherein the interleaved first frequency domain resource is the second frequency domain resource.

5. The method according to claim 2, wherein processing the first frequency domain resource to determine the third frequency domain resource that is entirely located in the active bandwidth part of the second time domain unit comprises:
when the repetition is a downlink transmission without interleaving, shifting the first frequency domain resource in a frequency domain to shift the first frequency domain resource into a downlink bandwidth part of the second time domain unit, wherein the shifted first frequency domain resource is the third frequency domain resource; and/or
when the repetition is a downlink transmission with interleaving, performing an interleaving operation in the downlink bandwidth part of the second time domain unit to interleave the first frequency domain resource into the downlink bandwidth part of the second time domain unit, wherein the first frequency domain resource after interleaving is the third frequency domain resource.

6. The method according to claim 2, wherein processing the first frequency domain resource to determine the third frequency domain resource that is entirely located in the active bandwidth part of the second time domain unit comprises:
when the repetition is an uplink transmission without frequency hopping, shifting the first frequency domain resource in a frequency domain to shift the first frequency domain resource into an uplink bandwidth part of the second time domain unit, wherein the shifted first frequency domain resource is the third frequency domain resource; and/or
when the repetition is an uplink transmission with frequency hopping, performing a frequency hopping operation in the uplink bandwidth part of the second time domain unit to make the first frequency domain resource hop into a downlink bandwidth part of the second time domain unit, wherein the first frequency domain resource after interleaving is the third frequency domain resource.

7. A repetition method, performed by a network device, the method comprising:
determining a first time domain unit used by a terminal for a full-duplex communication and/or a second time domain unit not used for the full-duplex communication;
determining a first frequency domain resource used by the terminal for a repetition;
when the first frequency domain resource for the repetition in the first time domain unit is not entirely located in a subband of the first time domain unit, processing the first frequency domain resource to determine a second frequency domain resource that is entirely located in the subband of the first time domain unit, and performing the repetition with the terminal in the second frequency domain resource in the first time domain unit; and/or
when the first frequency domain resource for the repetition in the second time domain unit is not entirely located in an active bandwidth part of the second time domain unit, performing the first frequency domain resource to determine a third frequency domain resource that is entirely located in the active bandwidth part of the second time domain unit, and performing the repetition with the terminal in the third frequency domain resource in the second time domain unit.

8. The method according to claim 7, wherein the first time domain unit comprises at least one of:
an uplink slot comprising a downlink subband;
a flexible slot comprising a downlink subband;
a downlink slot comprising an uplink subband; or
a flexible slot comprising an uplink subband.

9. The method according to claim 8, wherein the first time domain unit comprises the uplink slot or the flexible slot comprising the downlink subband, and processing the first frequency domain resource to determine the second frequency domain resource that is entirely located in the subband of the first time domain unit comprises:
when the repetition is a downlink transmission without interleaving, shifting the first frequency domain resource in a frequency domain to shift the first frequency domain resource into the downlink subband of the first time domain unit, wherein the shifted first frequency domain resource is the second frequency domain resource; and/or
when the repetition is a downlink transmission with interleaving, performing an interleaving operation in the downlink subband of the first time domain unit to interleave the first frequency domain resource into the downlink subband of the first time domain unit, wherein the interleaved first frequency domain resource is the second frequency domain resource.

10. The method according to claim 8, wherein the first time domain unit comprises the downlink slot or the flexible slot comprising the uplink subband, and processing the first frequency domain resource to determine the second frequency domain resource that is entirely located in the subband of the first time domain unit comprises:
when the repetition is an uplink transmission without frequency hopping, shifting the first frequency domain resource in a frequency domain to shift the first frequency domain resource into the uplink subband of the first time domain unit, wherein the shifted first frequency domain resource is the second frequency domain resource; and/or
when the repetition is an uplink transmission with frequency hopping, performing a frequency hopping operation in the uplink subband of the first time domain unit to make the first frequency domain resource hop into a downlink subband of the first time domain unit, wherein the first frequency domain resource after interleaving is the second frequency domain resource.

11. The method according to claim 8, wherein processing the first frequency domain resource to determine the third frequency domain resource that is entirely located in the active bandwidth part of the second time domain unit comprises:
when the repetition is a downlink transmission without interleaving, shifting the first frequency domain resource in a frequency domain to shift the first frequency domain resource to a downlink bandwidth part of the second time domain unit, wherein the shifted first frequency domain resource is the third frequency domain resource; and/or
when the repetition is a downlink transmission with interleaving, performing an interleaving operation in the downlink bandwidth part of the second time domain unit to interleave the first frequency domain resource into the downlink bandwidth part of the second time domain unit, wherein the first frequency domain resource after interleaving is the third frequency domain resource.

12. The method according to claim 8, wherein processing the first frequency domain resource to determine the third frequency domain resource that is entirely located in the active bandwidth part of the second time domain unit comprises:
when the repetition is an uplink transmission without frequency hopping, shifting the first frequency domain resource in a frequency domain to shift the first frequency domain resource into an uplink bandwidth part of the second time domain unit, wherein the shifted first frequency domain resource is the third frequency domain resource; and/or
when the repetition is an uplink transmission with frequency hopping, performing a frequency hopping operation in the uplink bandwidth part of the second time domain unit to make the first frequency domain resource hop into the downlink bandwidth part of the second time domain unit, wherein the first frequency domain resource after interleaving is the third frequency domain resource.

13. A repetition system, comprising a terminal and a network side device, wherein the terminal is configured to implement the repetition method according to any one of claims 1 to 6, and the network side device is configured to implement the repetition method according to any one of claims 7 to 12.

14. A repetition apparatus, comprising:
a processing module configured to: determine a first time domain unit for a full-duplex communication and/or a second time domain unit not for the full-duplex communication; determine a first frequency domain resource for a repetition; and when the first frequency domain resource for the repetition in the first time domain unit is not entirely located in a subband of the first time domain unit, process the first frequency domain resource to determine a second frequency domain resource that is entirely located in the subband of the first time domain unit, and/or when the first frequency domain resource for the repetition in the second time domain unit is not entirely located in an active bandwidth part of the second time domain unit, process the first frequency domain resource to determine a third frequency domain resource that is entirely located in the active bandwidth part of the second time domain unit; and
a communication module configured to: perform the repetition in the second frequency domain resource in the first time domain unit; and/or perform the repetition in the third frequency domain resource in the second time domain unit.

15. A repetition apparatus, comprising:
a processing module configured to: determine a first time domain unit used by a terminal for a full-duplex communication and/or a second time domain unit not for the full-duplex communication; determine a first frequency domain resource used by the terminal for a repetition; and when the first frequency domain resource for the repetition in the first time domain unit is not entirely located in a subband of the first time domain unit, process the first frequency domain resource to determine a second frequency domain resource that is entirely located in the subband of the first time domain unit, and/or when the first frequency domain resource for the repetition in the second time domain unit is not entirely located in an active bandwidth part of the second time domain unit, process the first frequency domain resource to determine a third frequency domain resource that is entirely located in the active bandwidth part of the second time domain unit; and
a communication module configured to: perform the repetition with the terminal in the second frequency domain resource in the first time domain unit; and/or perform the repetition with the terminal in the third frequency domain resource in the second time domain unit.

16. A communication apparatus, comprising:
a processor; and
a memory configured to store a computer program;
wherein when the computer program is executed by the processor, the repetition method according to any one of claims 1 to 6 is implemented.

17. A communication apparatus, comprising:
a processor; and
a memory configured to store a computer program;
wherein when the computer program is executed by the processor, the repetition method according to any one of claims 7 to 12 is implemented.

18. A computer-readable storage medium storing a computer program, wherein when the computer program is executed by a processor, the repetition method according to any one of claims 1 to 6 is implemented.

19. A computer-readable storage medium storing a computer program, wherein when the computer program is executed by a processor, the repetition method according to any one of claims 7 to 12 is implemented.
